Europäisches Patentamt

European Patent Office

Office européen des brevets

(19)

(11) Publication number: **0 223 392**
A1

(12) **EUROPEAN PATENT APPLICATION**

(21) Application number: 86307763.2

(22) Date of filing: 08.10.86

(51) Int. Cl.⁴: **A01D 43/10** , A01D 82/00 , A01D 34/66

(30) Priority: 10.10.85 GB 8525023

(43) Date of publication of application:
27.05.87 Bulletin 87/22

(84) Designated Contracting States:
DE FR NL

(71) Applicant: **NATIONAL RESEARCH
DEVELOPMENT CORPORATION
101 Newington Causeway
London SE1 6BU(GB)**
0

(72) Inventor: **Klinner, Wilfred Erwin Beechwood
Heath Lane Aspley Heath Woburn Sands
Milton Keynes Buckinhamshire MK17
8TN(GB)**

(74) Representative: **Laight, Martin Harvey
W H Beck, Greener & Company 7 Stone
Buildings Lincoln's Inn
London WC2A 3SZ(GB)**

(54) **Apparatus for cutting crop.**

(57) Crop cutting apparatus comprises a mobile frame (14) and two crop cutting units (11 and 11A), each comprising a lower rotor (13,13A) for cutting crop and an upper rotor (12,12A) for conveying cut crop. The upper and lower rotors of each unit are rotated at differential speeds about a vertical axis, and the upper rotors (12 and 12A) carry crop inwardly and rearwardly between the two crop cutting units. The upper rotor (12) has planar, outwardly extending crop engaging elements (18) each of which extends outwardly and upwardly and is presented substantially edge-ways to the crop. Each element (18) may have a reclined, serrated, leading edge (21) for conditioning crop.

FIG. 1.

# APPARATUS FOR CUTTING CROP

The present invention relates to apparatus for cutting crop, especially, but not exclusively, for cutting forage crops such as grasses.

The invention is also concerned in some aspects with conditioning of grass and other fibrous fodder crop. Conditioning is a form of crop treatment intended to allow moisture to escape from the crop during wilting, without excessive fragmentation of the crop and without excessive loss of nutrients. It is common practice in agriculture to mechanically treat the crop to effect this conditioning, and such mechanical treatment may take various forms including crushing lacerating, bruising, splitting, spiking, bending and scuffing stems or leaves of the crop. In some aspects the invention is concerned with apparatus for cutting crop and conditioning the cut crop.

In accordance with the present invention there is provided crop cutting apparatus comprising a mobile frame for movement over the ground, and at least one crop cutting unit comprising cutting means for cutting crop and a conveying rotor for conveying cut crop, the cutting means and the conveying rotor being mounted for rotation about the same vertical or near vertical axis, in which the conveying rotor of each unit has a plurality of outwardly extending crop engaging elements, each crop engaging element being inclined upwardly in an outward direction from the rotor axis, and each element being a substantially planar element arranged to be presented substantially edgeways to the crop during rotation of the conveying rotor.

Preferably each element is a substantially planar element, that is to say an element, which at least at a crop engaging region thereof, has a thickness smaller than its other dimensions, and lies substantially in a curved or flat plane.

Preferably each crop engaging element is so shaped as to present a small, preferably minimum, area of the element to the crop, preferably so shaped as to present substantially line or strip contact with the crop.

Preferably each crop engaging element has a reclined outer crop engaging edge leading upwardly and rearwardly relative to the direction of rotation of the upper rotor, and preferably each crop engaging element is so shaped as to present to the crop as its leading crop engaging profile substantially only the said reclined edge of the element.

Preferably the said reclined edges of the elements are serrated or otherwise profiled to enhance the crop engaging effect.

In some arrangements, the said plurality of crop engaging elements includes elements inclined at different angles to a plane perpendicular to the axis of rotation of the rotor.

It may be arranged that the crop engaging elements are arranged in groups, each group comprising two or more elements succeeding each other around the rotor and formed from a common member, the succeeding elements for each group, taken in the direction of rotation of the rotor, being inclined at progressively changing angles to the said plane perpendicular to the rotor axis, and preferably the said progressively changing angles of the succeeding elements are progressively increasing angles.

Preferably each element is so shaped and of sufficient size, to effect a crop conditioning treatment on crop cut by the lower rotor.

In most, preferred, arrangements it is arranged that the said outwardly extending crop engaging elements extend outwardly over the crop cutting path of the cutting means.

Although as will be set out below, the invention has particular application where the conveying rotor and the cutting means are mounted separately to rotate at different speeds, it is particularly to be appreciated that the invention may be used where the cutting unit has a single main cutting and conveying rotor, i.e. where the said cutting means are fastened to the conveying rotor and in operation rotate therewith.

However, the invention has particular application where each crop cutting unit comprises a lower rotor constituting the cutting means and an upper rotor constituting the conveying rotor, and there is provided drive means for rotating the upper and lower rotors of the or each unit in rotation about the said vertical or near vertical axis at different peripheral speeds and/or in different directions of rotation.

The invention has particular application where the drive means is arranged to drive the upper and lower rotors in co-rotation but at different speeds, the lower rotor rotating at a higher speed suitable for cutting, and the upper rotor rotating at a lower speed suitable for conditioning.

The invention also has use where the drive means is arranged to drive the upper and lower rotors of each unit in counter-rotation. Where this is the case it is preferred that the said outwardly extending crop engaging elements extend outwardly at least to the outer periphery of the crop cutting path of the lower rotor, and most preferably the said outwardly extending crop engaging elements extend outwardly beyond the outer periphery of the crop cutting path of the lower rotor.

In one form of the invention the conveying rotor has a second plurality of crop engaging elements, each of which protrudes outwardly over the crop cutting path of the cutting means, and each of which projects outwardly either horizontally or inclined upwardly at a lesser angle to the horizontal than the first plurality of elements. This arrangement is particularly effective where the unit has upper and lower rotors which are rotated in counter rotation. Conveniently the first plurality of crop engaging elements are larger and exert a predominantly crop conveying and crop conditioning function, and the second plurality of crop engaging elements act as crop support elements and cooperate with the cutting rotor to effect cutting at least partly by shear. Preferably the second crop engaging elements extend outwardly beyond the crop cutting circle of the cutting means. Preferably each second crop engaging element comprises a planar element presented substantially edge ways to the crop.

Also in all aspects, it is a preferred arrangement that the apparatus comprises two crop cutting units, arranged with the crop conveying rotors of the two units rotating in counter rotation to each other in a direction such as to carry crop inwardly and rearwardly between the two crop cutting units.

In some arrangements, the crop cutting rotors may be bottom-driven disc mowers, in addition to the possibility of conventional overhead driven drum mowers.

In accordance with a further independent aspect of the invention, there may be provided, a mobile frame for movement over the ground, at least one crop cutting unit comprising a lower rotor for cutting crop and an upper rotor for conveying cut crop, the upper and lower rotors being mounted for rotation about the same axis, and drive means for rotating the upper and lower rotors of the or each unit in rotation about a vertical or near vertical axis at different peripheral speeds and/or in different directions of rotation, in which the upper rotor of each unit has a plurality of outwardly extending crop engaging elements each extending outwardly over the crop cutting path of the lower rotor either in a plane perpendicular to the axis of rotation of the rotor or inclined upwardly relative to that plane.

In some arrangements the drive means is arranged to drive the upper and lower rotors in counter-rotation and the crop engaging elements act as crop support elements and co-operate with the cutting rotor to effect cutting at least partly by shear. Where this is the case, it is preferred that the crop engaging elements extend outwardly slightly beyond the crop cutting circle of the lower rotor.

Preferably each crop engaging element has a reclined outer crop engaging edge leading upwardly and rearwardly relative to the direction of rotation of the crop conveying rotor, and preferably each crop engaging element is so shaped as to present to the crop as its crop engaging profile substantially only the said reclined edge of the element.

In general, features which have been set out in connection with the first aspect of the invention may be adopted in connection with the second aspect, and vice versa.

Crop cutting apparatus in accordance with the various aspects of the invention set out above provide, at least in preferred embodiments, a number of advantages in comparison with previously known crop cutting apparatus. In general discussion of the advantages of the invention, reference will be made to a preferred form of the crop cutting means which includes a plurality of outwardly directed knives, although it will be appreciated that alternative forms of crop cutting means may be used, for example a serrated disc.

Considering firstly the aspect of the invention in which crop support elements are attached to the upper rotor of a cutting unit, and protrude outwardly at least horizontally, and preferably upwardly, into the zone swept by the cutting knives, and optionally marginally beyond this, the leading edge of each element may be straight, bent upwards at one or more points or curved, and is preferably reclined to the direction of rotation. The leading edge may also be plain, stepped, serrated or otherwise profiled, so that with the crop support function is combined a more or less severe crop conditioning function. Preferably the elements are made of resilient, planar material and are so secured to the upper rotor that damage from foreign objects in the grass is prevented.

The elements operate more effectively than similar elements which are inclined downwardly, since downwardly inclined elements, especially if the supports make contact with the uncut crop marginally before the knives do, deflect the crop too severely downwardly for efficient cutting to be achieved in the opposite direction. Horizontal or upwardly inclined crop support elements used in the counter rotational mode can favourably affect cutting.

The crop support elements themselves may have slightly reclined leading edges in order to achieve the most effective cooperating angle with the knives. The more the projecting portions of the crop support elements are upwardly inclined, the greater will be the conditioning effect on the lower parts of the crop stems which is achieved incidentally.

Considering the aspect of the invention in which there are provided crop conditioning elements of planar material presented substantially edge-ways to the crop with a reclined leading crop engaging edge, these elements are more effective than previously known elements which present a substantial surface and act like fan blades and can lead to flow problems at the crop intake and exit regions. Known crop conveying rotors generally present a relatively large surface area in the direction of rotation, and consequently drive air in front of them, thus minimising the opportunity to do physical work on the crop. By contrast, the crop conditioning elements provided in accordance with the present invention may each present substantially line contact, or only a small area, to the crop and surrounding air, so that collision with the crop is assured. In addition, any crop contacted will generally be directed upwardly along the crop engaging edge, which, if serrated, can provide further crop conditioning effect.

The crop conditioning elements described can be used in cooperation with lower co-rotating, as well as counter-rotating, cutting rotors, which need not be full discs but can be scalloped or spoked in a substantial part of the outer region. In conjunction with cutting rotors rotating in either direction, the conditioning elements need not be protruding over the crop cutting circle of the lower rotor, but in association with counter-rotating cutting rotors especially it is preferable that the tips of the crop engaging elements protrude to at least the tip circle of the cutting rotor. Such crop conditioning elements then act as crop supports, particularly in tall vegetation, as well as effective means of physically conditioning the crop, accelerating it, lifting it and conveying it. Protrusion beyond the tip circle of a counter-rotating cutting rotor results in standing crop being stroked so that it leans towards the oncoming knives of the cutting rotor for favourable cutting.

Whether the upper and lower rotors of a crop cutting unit are rotated in co-rotation or in counter-rotation, it is preferred that at least some crop engaging elements on the upper rotor protrude outwardly to a variable extent up to the periphery of the crop cutting circle of the lower rotor. IN the case of co-rotation, any outwardly extending crop engaging elements should preferably be upwardly inclined.

Preferably any edge of a conditioning element which leads up to the said reclined crop engaging edge, is also reclined, to prevent hairpinning of crop, to ensure smooth crop flow and to contribute to the conditioning effect without causing significant fragmentation.

Embodiments of the invention will now be described by way of example with reference to the accompanying drawings in which:-

Figure 1 is a perspective view from the front of crop cutting apparatus embodying the invention;

Figure 2 is a diagrammatic edge view, partly in section, taken in a vertical plane and showing a crop engaging element embodying the invention;

Figure 2(a) is a side view along the direction $\underline{X}$ in Figure 2;

Figure 3 is a plan view of a modified form of crop engaging element embodying the invention, and utilising a hinge:

Figure 3(a) shows a modified form of the element of Figure 3;

Figure 4 is a diagrammatic plan view of a further modified form of crop engaging element embodying the invention;

Figure 5 is a diagrammatic edge view partly in section of a further form of crop engaging element embodying the invention;

Figures 6 and 6(a) show respectively a diagrammatic edge view partly in section, and a plan view, of a crop support element embodying the invention for producing shear cutting in cooperation with a cutting knife;

Figure 7 is a diagrammatic plan view of a further alternative form of crop support element embodying the invention;

Figures 8 and 8(a) show respectively a diagrammatic edge view partly in section, and a side view taken in the direction of the arrow $\underline{Y}$ in Figure 8, of a crop engaging element embodying the invention; and Figure 8(b) shows in side view a modification of the element of Figure 8(a).

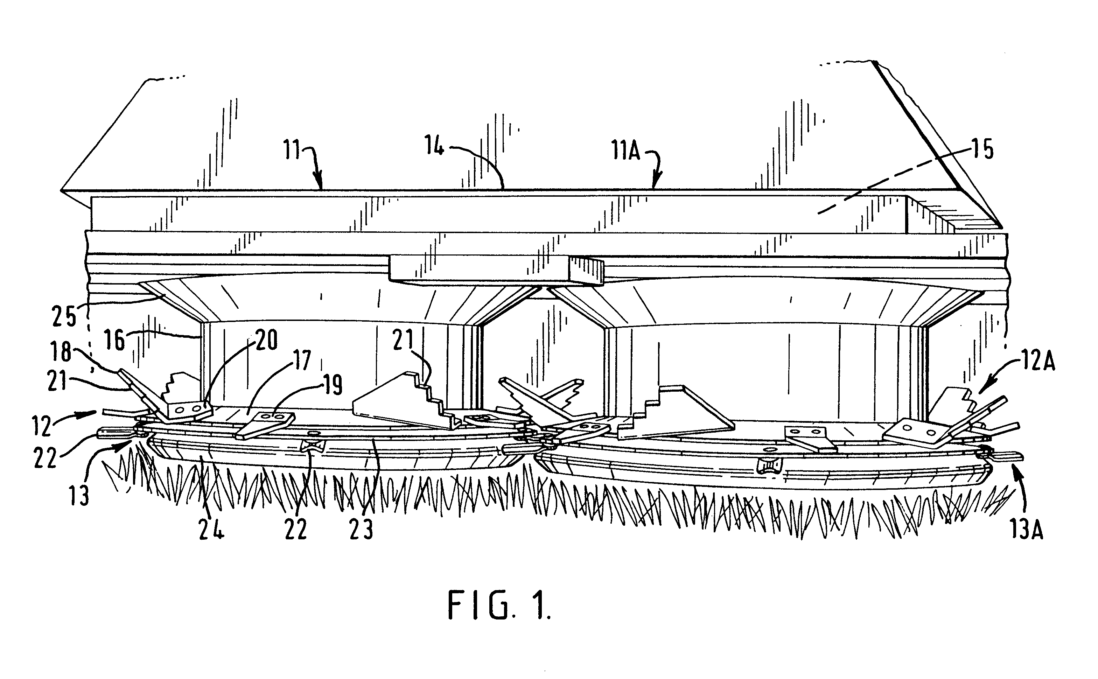

Referring first to Figure 1, there is shown a crop cutting apparatus embodying the invention comprising two crop cutting units 11 and 11A. The cutting units comprise upper rotors 12 and 12A and lower rotors 13 and 13A, respectively. Only the crop cutting unit 11 will be described in detail, since the unit 11A is identical except for the reversal of a number of components and the rotation of the rotors 12A and 13A in the opposite direction to the rotors 12 and 13 respectively.

The crop cutting units 11 and 11A are suspended from a main frame 14 in the manner of conventional drum mowers, and the frame 14 contains a drive means in the region 15 for driving the crop cutting units 11 and 11A in rotation. The upper and lower rotors 12 and 13 of the cutting unit 11 may be driven in co-rotation to each other at different speeds, or in counter-rotation to each other at the same or different speeds, as may the upper and lower rotors 12A and 13A of the cutting unit 11A. The drive means may, for example, be as described in our prior patent GB-B-2081567.

In the example shown, the upper rotors 12 and 12A are driven in counter rotation to each other, in a sense such as to rotate inwardly and rearwardly relative to the forward direction of movement of the apparatus. The lower rotors 13 and 13A may rotate in counter rotation to each other in directions outwardly and forwardly or may rotate in the same directions as the upper rotors but at different speeds. The upper rotors 12 and 12A rotate in directions such as to convey crop inwardly and rearwardly between the two crop cutting units 11 and 11A.

Although in the embodiment to be described in detail, upper and lower rotors are provided in each unit, rotating in co-rotation or counter-rotation to each other, it is to be appreciated that the embodiments to be described are also applicable in the case where each unit has a single rotor and the cutters are mounted on the conveying rotor, conveniently on the underside thereof.

Considering the crop cutting unit 11, the upper rotor 12 comprises a vertical cylindrical portion 16 and a lower outwardly flared skirt 17, generally in the manner of a conventional drum mower, except that the cylindrical portions 16 are lower and substantially larger in diameter, to confine the cut crop into the annular spaces swept by the crop engaging elements. Thus the height of the cutting units 11 and 11A is considerably reduced compared with conventional drum mowers. In addition there is provided at the top of each vertical drum 16 an outwardly flared upper member 25. Mounted on the skirt 17 are six crop engaging elements 18, each of which performs chiefly a crop conveying and crop conditioning function, and six crop engaging elements 19, each of which performs chiefly a crop support function. Each crop engaging element 18 is a substantially planer element having its principal plane inclined upwardly relative to the horizontal, and positioned so as to present only a small area to the crop, i.e positioned substantially edge-on to the crop. A base portion 20 of the element 18 is secured to the skirt 17 for example by being bolted to the skirt. The element 18 has an outer crop engaging edge 21 which leads upwardly and rearwardly relative to the direction of rotation of the upper rotor 12 and which is serrated to increase the crop conditioning effect. Each element 18 protrudes outwardly over the crop cutting circle of the lower rotor 13, and preferably extends out to the periphery of the crop cutting circle of the lower rotor 13.

Each crop support element 19 comprises a planar element extending outwardly substantially horizontally from the skirt 17, to which it is bolted at a base portion of the element. The element 19 has a radial leading edge, and an inclined trailing edge. Each element 19 is again a substantially planar element positioned to be presented edge on to the crop. Each element 19 protrudes outwardly over the crop cutting circle of the lower rotor 13, preferably protruding outwardly slightly beyond the outer periphery of the crop cutting circle. Conveniently both the elements 18 and 19 are formed of synthetic plastics material, conveniently polypropylene, or polyurethane, although elements may be used which are partly or completely made of metal.

The lower rotor 13 has a plurality of outwardly directed cutting knives 22, conveniently pivoted or otherwise mounted on a support disc 23. Beneath the cutting rotor 13, is provided a ground skid 24 which may conveniently by freely rotating, or may be fixed. As shown, the various elements of the two crop cutting units 11 and 11A intermesh with each other, and the drive means in the region 15 is arranged to drive the elements in rotation in synchronism so at to avoid contacts between elements of the two units 11 and 11A. It will be appreciated that other arrangements can be made for non-synchronous rotation if the units are spaced further apart. It will also be appreciated that in other arrangements a plurality of units 11 may be provided spaced transversely across the direction of forward travel of the apparatus, either rotated in contrarotation in pairs, or having a number of units rotating in the same direction so as to carry crop transversely across the bank of cutting units.

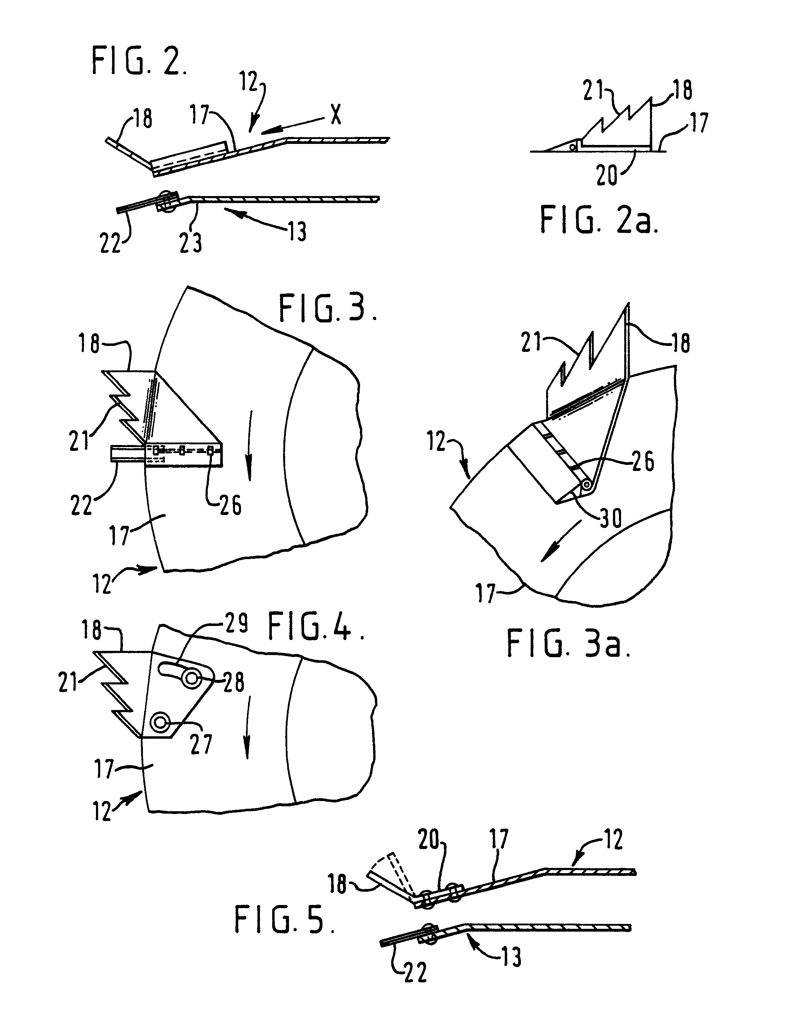

Figures 2 and 2(a) show diagrammatic edge and side views respectively of a modification of the apparatus shown in Figure 1, and corresponding components will be referred to by like reference numerals, as will be the case with the remainder of the Figures 3 to 8. In Figure 2, a crop engaging element 18 is mounted on the skirt 17 and has a serrated leading edge 21. In the example of Figure 2, the element 18 protrudes outwardly beyond the tips of the knives 22.

In Figure 3 there is shown an alternative form of crop engaging element 18, which is secured to the skirt 17 by a heavy duty hinge 26, allowing the element to deflect if it encounters a substantial object. A modification of the hinged crop engaging element 18 is shown in Figure 3(a). The hinge may be preceded by a smooth ramp 30 to prevent crop accumulation. The hinge 26 may be set at various angles to the rotor radius, to achieve different responses in the event of collisions. It is also possible to mount the hinge on a baseplate which is itself pivoted in the manner described with reference to Figure 4.

A further modified form of the crop engaging element 18 is shown in Figure 4, where the element is secured to the skirt 17 by two bolts 27 and 28. The element 18 is able to pivot about the bolt 27, the bolt 28 allowing movement of the element 18 by means of a slot 29 in the element. The second locating bolt 28 locates the element in the operative position at the end of the arcuate slot under the influence of centrifugal force. In the event of a collision with a foreign object, the element can bend and pivot momentarily into a pronounced inwardly trailing position.

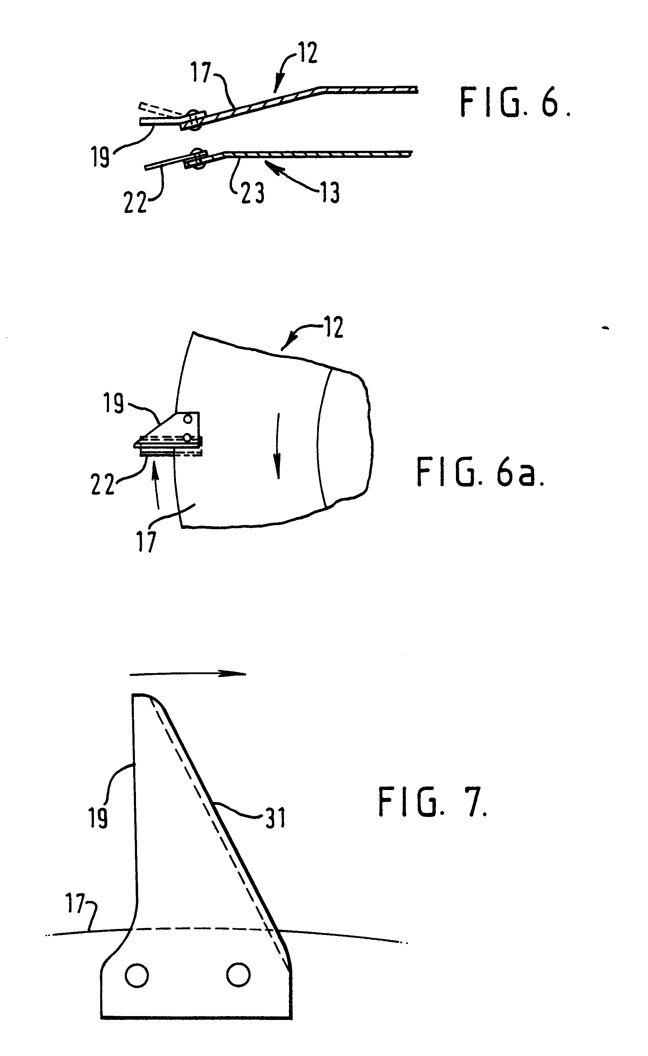

In Figure 5, there is shown an arrangement generally similar to that shown in Figure 2, but there is indicated in dotted lines a position to which the element 18 may deflect, by virtue of the element 18 being made of resilient material, such as resilient synthetic plastics material. Again damage protection is provided.

Thus, to summarise the form of crop engaging elements which may be used, it is preferred that some provision be made for deflection of the elements to avoid damage. Although the elements may be made partly or completely from steel, it is preferred that they are constructed of impact and wear resistant plastics material which has sufficient resilience to keep its predetermined shape under the influence of centrifugal force but can bend sufficiently between the tip and the mounting region to avert serious damage should it collide with a foreign object. Because of the substantial height above the ground of the elements shown, it is likely that deflection resulting from contact with an object on the ground will usually be upwards. The simplest method of fastening the elements 18 is by means of two bolts. The bolts may lie either on the same periphery relative to the rotor centre or on a radial line. As another alternative, bolts may be fitted on different peripheries, preferably the leading bolt being closer to the rotor centre than the trailing bolt, in order to increase the ability of the leading edge to bend upwardly.

Figure 6 shows a diagrammatic edge view of one of the crop support elements 19 shown in Figure 1, and Figure 6(a) shows a plan view of the same. As shown, the crop support element 19 extends slightly beyond the outer periphery of the path of the knives 22. In full lines in Figure 6 the crop support element 19 is shown substantially horizontal, and in broken lines an alternative is shown in which the crop support element 19 is inclined upwardly relative to the horizontal.

Figure 7 shows an alternative form of crop support element 19, in which the leading edge 31 is inclined rearwardly relative to a radius of the upper rotor. By way of example the distance from the centre of the support bolt of the element 19 to its tip may be 162mm, and the angle made by the edge 31 to the radius may be approximately 25°, or in other arrangements 35° to 40°. The element may have a ramp shape, whereby there is a 10° lift from the front to the rear of the element relative to the horizontal, taken in the direction of rotation of the rotor. Optionally there may then be provided a 10° bevel on the underside of the leading edge.

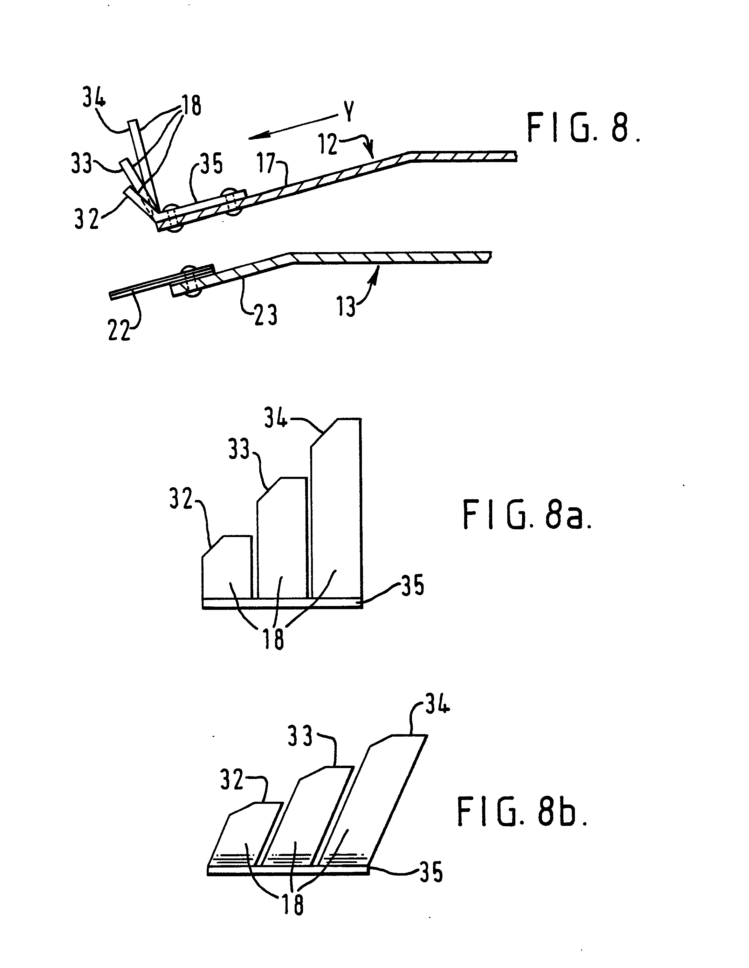

Figures 8 and 8(a) show an alternative form of the crop engaging elements 18, used here for conditioning purposes. Three crop engaging elements 18 are shown combined into a group. The elements 18 are formed from a single member 35 divided into three portions indicated at 32, 33 and 34, and each of these portions is inclined at a different angle to a plane perpendicular to the axis of rotation of the rotor, so that the crop treatment is effective over a greater crop height. The tips of the wing portions 32, 33 and 34 may lie in the same vertical plane, or in a plane which is angled away from or towards the rotor centre at the top. One advantage of the arrangement is that a greater effective resilience is provided for the conditioning elements, where the elements are made of resilient material. Another advantage is that, because of the greater effectiveness, fewer conditioning elements are needed, especially in the upper region of the conditioning speed range. The outwardly extending parts of the member 35 may be straight or curved.

In Figure 8(b) there is shown a further alternative in which the outstanding crop engaging elements 18 are inclined rearwardly relative to the direction of movement of the elements upon rotation of the rotor.

Although in Figures 8 to 8(b) three differently inclined elements 18 are shown, in other arrangements there may be provided two, or more than three, crop engaging elements in a group, inclined at different angles.

In a modification of the arrangement of Figures 8, 8(a) and 8(b), the lowermost element 18 may lie in a plane perpendicular to the axis of rotation of the rotor, conveniently horizontal. Such an element may serve a crop support function during counter-rotation of upper and lower rotors and a low-level conditioning function during co-rotation at differential speed.

Considering now the general parameters which may be used in embodiments of the invention, the crop engaging elements mounted on the upper rotor are effective at tip speeds in the approximate range 15 to 50 m/s. Preferable speeds are 20 to 40 m/s and most preferably 25 to 35 m/s. The crop engaging elements may be made of steel, impact resistant nylon or polypropylene but most preferably polyurethane with a Shore hardness of 55 to 70°D. In co-rotating mode the knife tip speed is preferably at least 40 to 90 m/s, but in counter-rotating mode it may be 30 to 60 m/s depending on the number of knives, their thickness and length and the resistance to deflection.

In the case of drum-type mowers the height of each drum exposed to the crop need only be a quarter to a third of the effective cutting diameter. There may be provided at the top of each cutting unit a rim which slopes downwardly towards the drum from vertically about the knives. The periphery of the rim may be plain or scalloped to varying degrees to support long crop. It is also possible to make a plain rim so that it is stationary and to attach to it downwardly pointing crop engaging elements to increase the resistance of the cut crop to being accelerated by the crop supporting/conditioning attachments on the rotor beneath.

## Claims

1. Crop cutting apparatus comprising
a mobile frame (14) for movement over the ground, and
at least one crop cutting unit (11) comprising cutting means (22) for cutting crop and a conveying rotor (12) for conveying cut crop, the cutting means (22) and the conveying rotor (12) being mounted for rotation about the same vertical or near vertical axis,
characterised in that the conveying rotor (12) of each unit (11) has a plurality of outwardly extending crop engaging elements (18), each crop engaging element (18) being inclined upwardly in an outward direction from the rotor axis, and each element (18) being arranged at least at its leading edge to be presented substantially edgeways to the crop during rotation of the conveying rotor (12).

2. Apparatus according to claim 1 in which each element (18) is a substantially planar element.

3. Apparatus according to claim 1 or 2 in which each crop engaging element (18) has a reclined outer crop engaging edge (21) leading upwardly and rearwardly relative to the direction of rotation of the crop conveying rotor (12).

4. Apparatus according to claim 3 in which the said reclined edges (21) of the elements are serrated or otherwise profiled to enhance the crop engaging effect.

5. Apparatus according to any preceding claim in which the said plurality of crop engaging elements (18) includes elements (18) inclined at different angles to a plane perpendicular to the axis of rotation of the rotor.

6. Apparatus according to any preceding claim in which each element (18) is so shaped and is of sufficient size to effect a crop conditioning treatment on crop cut by the rotary cutting means.

7. Apparatus according to any preceding claim in which the said outwardly extending crop engaging elements (18) extend outwardly over the crop cutting path of the cutting means (22).

8. Apparatus according to any preceding claim in which each crop cutting unit (11) comprises a lower rotor (13) constituting the cutting means and an upper rotor (12) constituting the conveying rotor, and there is provided drive means in the region - (15) for rotating the upper and lower rotors (12,13) of the or each unit (11,11A) in rotation about the said vertical or near vertical axis at different peripheral speeds and/or in different directions of rotation.

9. Apparatus according to claim 8 in which the drive means (15) is arranged to drive the upper and lower rotors (12,13) of each unit (11,11A) in counter-rotation, and the said outwardly extending crop engaging elements (18) extend outwardly at least to the outer periphery of the crop cutting path of the lower rotor (13).

10. Apparatus according to any preceding claim in which the conveying rotor (12) has a second plurality of outwardly extending crop engaging elements (19), each of which protrudes outwardly over the crop cutting path of the cutting means (22), and each of which projects outwardly either horizontally or inclined upwardly at a lesser angle to the horizontal than the first plurality of elements (18).

FIG. 1.

FIG. 2.

FIG. 2a.

FIG. 3.

FIG. 3a.

FIG. 4.

FIG. 5.

FIG. 6.

FIG. 6a.

FIG. 7.

FIG. 8.

FIG. 8a.

FIG. 8b.

| | **DOCUMENTS CONSIDERED TO BE RELEVANT** | | EP 86307763.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X,D | GB - A 2 081 567 (NATIONAL RESEARCH DEVELOPMENT CORPORATION) <br> * Fig. 1,2,12,12a * | 1,2,3, 4,6,8 | A 01 D 43/10 <br><br> A 01 D 82/00 <br><br> A 01 D 34/66 |
| A | AT - B - 263 432 (ALMABAL GMBH) <br> * Fig. 1-6 * | 1,8 | |
| A | DE - A - 1 757 691 (MASCHINEN-FABRIK FAHR AG) <br> * Totality * | 1,2,8 10 | |
| A | DE - A-1 757 541 (MASCHINEN-FABRIK FAHR AG) <br> * Totality * | 1,8 | |
| A | DE - A - 1 902 599 (MASCHINEN-FABRIK FAHR AG) <br> * Totality * | 1,2,6, 7 | **TECHNICAL FIELDS SEARCHED (Int. Cl.4)** <br><br> A 01 D 34 |
| A | DE - A1 - 2 608 145 (MASCHINEN-FABRIK FAHR AG) <br> * Totality * | 1,2,6 | A 01 D 43 <br> A 01 D 82 |

The present search report has been drawn up for all claims

| Place of search | Date of completion of the search | Examiner |
|---|---|---|
| VIENNA | 30-12-1986 | RUMLER |